# EUROPÄISCHE PATENTSCHRIFT

(11) **EP 1 954 453 B1**
(45) Veröffentlichungstag und Bekanntmachung des Hinweises auf die Patenterteilung: **25.08.2010**
(21) Anmeldenummer: 06819628.6
(22) Anmeldetag: 20.11.2006
(51) Int. Cl.: B25J 17/02, B25J 19/00, F16C 11/10, F16M 11/14, B23K 37/04

(54) **TRAGARM FÜR EIN SPANN- UND ZENTRIERELEMENT EINES GREIFERGERÜSTES ZUM HALTEN VON RAUMFORMBAUTEILEN IN DER KFZ.-INDUSTRIE**
SUPPORT ARM FOR A CLAMPING AND CENTERING ELEMENT OF A GRIPPER FRAME FOR HOLDING THREE-DIMENSIONAL COMPONENTS IN THE MOTOR VEHICLE INDUSTRY
BRAS DE SUPPORT POUR UN ELEMENT DE SERRAGE ET DE CENTRAGE D'UNE STRUCTURE DE PREHENSION DESTINEE A RETENIR DES PIECES A FORME SPATIALE DANS L'INDUSTRIE AUTOMOBILE

(30) Priorität: 29.11.2005 DE 102005056811
(43) Veröffentlichungstag der Anmeldung: 13.08.2008
(73) Patentinhaber: ThyssenKrupp Drauz Nothelfer GmbH, 74076 Heilbronn (DE)
(72) Erfinder: ARNOLD, Roland, 88289 Waldburg (DE)
(74) Vertreter: Cohausz & Florack
(86) Internationale Anmeldenummer: PCT/EP2006/068678
(87) Internationale Veröffentlichungsnummer: WO 2007/063005

(56) Entgegenhaltungen:
- WO-A-01/75318
- DE-A1- 3 841 744
- US-A- 4 974 802
- US-A1- 2002 000 503

## Beschreibung

Die Erfindung betrifft einen Tragarm gemäß dem Oberbegriff des Anspruch 1 für ein Spann- und/oder Zentrierelement eines Greifergerüstes zum Halten von Raumformbauteilen, insbesondere in der Kfz.-Industrie.

Ein solcher Tragarm ist aus der US-B1-6 722 842 bekannt.

Bekannte Greifergerüste zum Halten von Raumformbauteilen beim Herstellen von Kraftfahrzeugkarosserien weisen Spanner und Zentrierstifte auf, die ein positionsgerechtes Halten eines Raumformbauteils ermöglichen. Solche Greifergerüste können mit Handlingsrobotern im Raum bewegt werden, wobei ein von einem Greifergerüst gehaltenes Raumformbauteil zu der Stelle transportiert und hier positionsgerecht gehalten werden kann, wo es an einer Kraftfahrzeugkarosserie angebracht bzw. mit anderen Karosseriebauteilen verbunden werden soll. Da bei einer Karosserie eines Kraftfahrzeuges verschiedene Raumformbauteile zu handlen sind, ist es bekannt, das Greifergerüst bezüglich seiner von Tragarmen gehaltenen Spann- und Zentrierelementen der Geometrie des jeweils zu handlenden Bauteils anzupassen. Dazu ist gemäß US-B1-6 722 842 in jedem Tragarm ein Verstellmechanismus integriert, der eine in einer Klemm - und Löseeinheit gehaltene Kugel mit angeformten Zylinderzapfen umfasst, die eine Verschwenkung und eine Verschiebung und Verdrehung der vom Tragarm gehaltenen Spann- und Zentrierelemente erlauben. Die Klemm- und Löseeinheit besteht im wesentlichen aus mit Spannbolzen verspannbaren Klemmschellen bzw. Klemmbacken. Dementsprechend erfordert es aufwendige Handarbeit, das Greifergerüst bezüglich seiner Spann- und Zentrierelemente auf die Geometrie eines neuen Bauteils einzurichten.

Der Erfindung liegt die Aufgabe zugrunde, einen Tragarm für ein Spann- und/oder Zentrierelement eines Greifergerüstes zum Halten von Raumformteilen der eingangs genannten Art zu schaffen, das bei einem Greifergerüst auf einfache Art und Weise das Einstellen auf unterschiedliche Geometrien von Raumformbauteilen ermöglicht.

Diese Aufgabe wird erfindungsgemäß durch einen Tragarm gemäß Anspruch 1 gelöst.

Bei einem mit dem erfindungsgemäßen Tragarm bestückten Greifergerüst lässt sich die Einrichtung der von Tragarmen gehaltenen Spann- und/oder Zentrierelemente bei einem Wechsel von einem Raumformbauteil auf ein Raumformbauteil mit anderer Geometrie ohne aufwendige Montagearbeiten, wie Lösen von Schraubenbolzen an Klemmschellen, Klemmbacken und dergleichen, einfach dadurch erledigen, dass die Klemmbacken der Kugel oder des Zylinderzapfens durch das Stellglied des Exzenter- und Kurvengetriebes gegen die die Klemmbacken beaufschlagende Klemmkraft des Krafterzeugers gelüftet werden. Dann können die Spann- und Zentrierelemente in die gewünschte Position bewegt werden, wo sie allein durch die Aufhebung der Lüftung fixiert werden. Bei einer Kugel ermöglichen die gelösten Klemmbacken nicht nur eine Verdrehung, sondern auch eine Verschwenkung um deren Zentrum, während die Klemmbacken bei einem Zylinderzapfen die Verdrehung des Zylinderzapfens um seine Achse, aber auch seine Verschiebung in Achsrichtung ermöglichen. Unter Klemmbacken werden nicht nur Segmente sondern auch Ringe und geschlitzte Hülsen verstanden. Welche spezielle Ausführung die Klemmbacken haben können, hängt im wesentlichen vom zu klemmenden Bauteil "Kugel" oder "Zapfen" ab..

Nach einer Ausgestaltung der Erfindung sind die Klemmbacken als an einander gegenüberliegenden Hälften der Kugel oder des Zylinderzapfens angreifende Schalen ausgestaltet, deren Abstand durch Stellmittel einstellbar ist. Bei einer Kugel sind die Klemmbacken vorzugsweise ring- bis kalottenförmig gestaltet.

Im folgenden wird die Erfindung anhand einer verschiedene Ausführungsbeispiele darstellenden Zeichnung näher erläutert. Im einzelnen zeigen:
- Fig. 1: einen Tragarm für ein Spannelement mit zwei Kugelgelenken und einem Längsauszug in schematischer Darstellung in Seitenansicht,
- Fig. 2: eine mechanische Klemm- und Löseeinheit eines Kugelgelenks im Axialschnitt,
- Fig. 3: eine mechanische Klemm- und Löseeinheit im Axialschnitt in einer zu Fig. 2 anderen Ausführung und
- Fig. 4: eine Klemm- und Löseeinheit für eine Schiebeverbindung mit einem hohlzylindrischen Zapfen im Axialschnitt in einer zu Fig. 2 ähnlichen Ausführung.

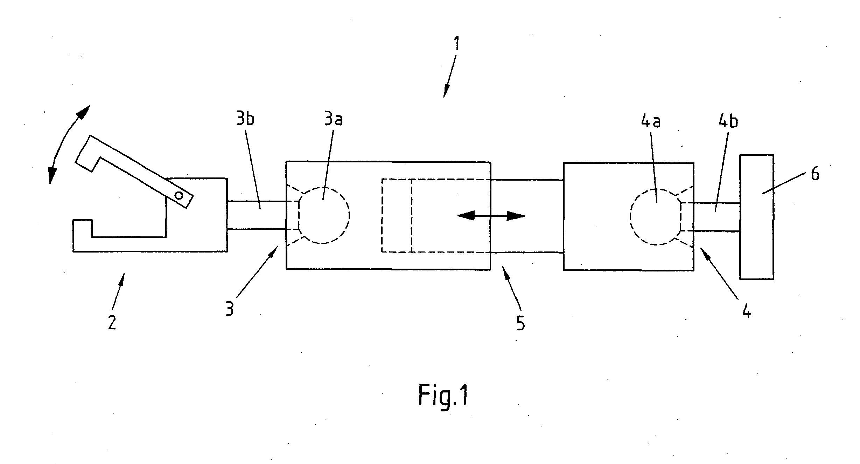

Der in Fig. 1 dargestellte Tragarm 1 für ein Spannelement 2 umfasst zwei Kugelgelenkverbindungen 3, 4 und einen dazwischen angeordneten Längsauszug 5. Das Spannelement 2 wird von einem an der Kugel 3a des Kugelgelenkes 3 angeformten Zapfen 3b getragen. Ein an der Kugel 4a des Kugelgelenkes 4 angeformter Zapfen 4b trägt einen Befestigungsflansch 6, mit dem der Tragarm 1 auf einer nicht dargestellten Konsole eines Greifergerüstes befestigbar ist. Den Kugelgelenken 3, 4 und dem Längsauszug 5 sind noch im einzelnen zu beschreibende Klemm- und Löseeinheiten zugeordnet, die es ermöglichen, dass bei gelöster Klemm- und Löseeinheit das Spannelement 2 gegenüber dem Befestigungsflansch 6 von einer Position im Raum an eine andere Position im Raum bewegt und hier fixiert werden kann. Dabei ermöglichen die Kugelgelenke 3, 4 eine Dreh- und Verschwenkbewegung.

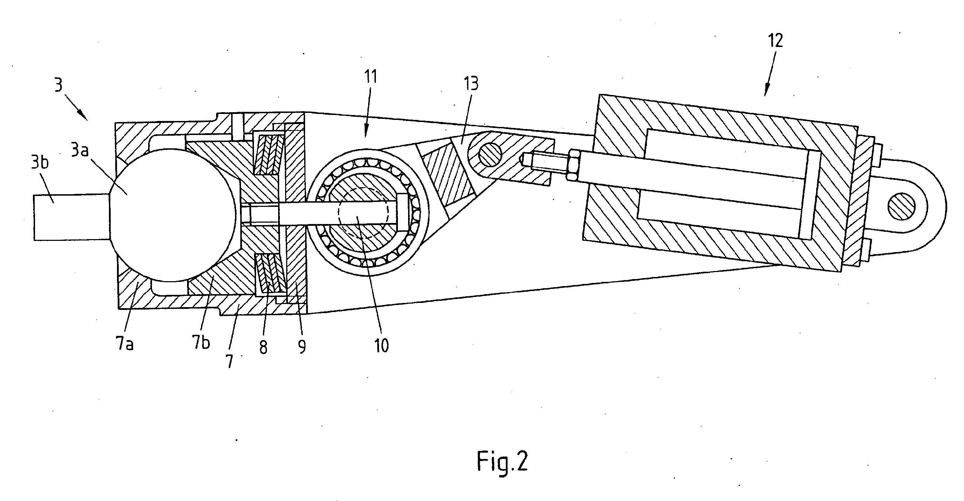

Beim Kugelgelenk 3 der Fig. 2 greifen auf beiden Hälften der Kugel 3a ringförmig gestaltete Klemmbacken 7a, 7b an. Der Klemmbacken 7a ist Teil eines Gehäuses 7, in dem der Klammbacken 7b geführt ist. Der Klemmbacken 7b wird in Richtung des Klemmbackens 7a durch eine als Tellerfeder ausgebildete Druckfeder 8 gedrückt, die an einer Widerlagerplatte 9 des Gehäuses 7 abgestützt ist. An der Klemmbacke 7b greift ein Zugbolzen 10 an, der mittels eines Exzentergetriebes 11 gegen die Druckkraft der Druckfeder 8 die Klemmbacke 7b von der Kugel 3a wegziehen kann. Das Exzentergetriebe 11 ist mit einem Hebelarm 13 an einem pneumatischen Antrieb 12 in Form einer ZylinderKolben-Einheit angeschlossen. In der in Fig. 2 dargestellten Stellung wird die Kugel 3a durch die Klemmbacken 7a, 7b festgeklemmt.

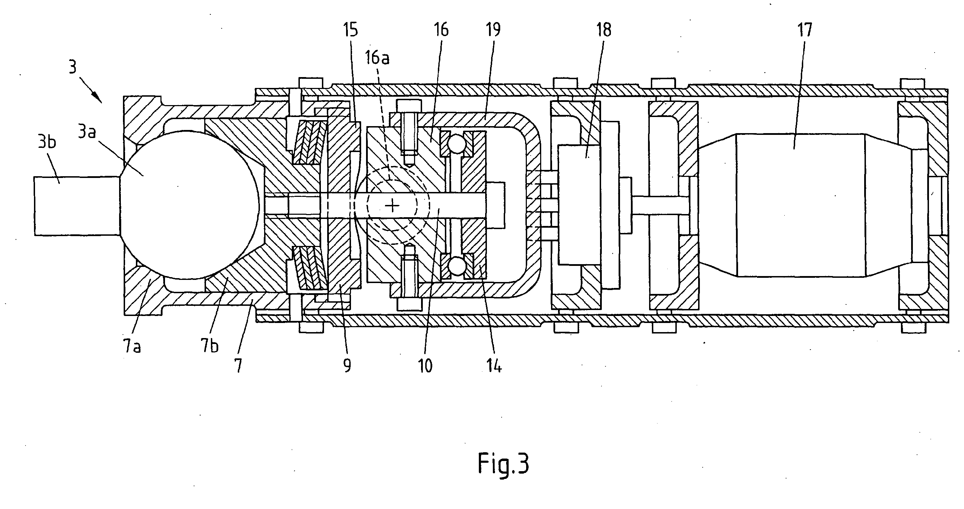

Das Ausführungsbeispiel der Fig. 3 unterscheidet sich von dem der Fig. 2 nur im Antrieb des Zugbolzens 10. Der Zugbolzen 10 ist an einer drehfesten, kugelgelagerten Kopfplatte 14 abgestützt, zwischen der und der Widerlagerplatte 9 ein Kurvengetriebe angeordnet ist, das aus einer an der Rückseite der Widerlagerplatte 9 ausgebildeten Radialkurve 15 und einem Antriebsklotz 16 besteht, der sich mit rollengelagerten, gegenüberliegenden Wellenzapfen 16a auf der Radialkurve 15 abstützt. Der Antriebsklotz 16 wird von einem Elektromotor 17 rund einem Getriebe 18 angetrieben. Der Ausgang des Getriebes 18 ist über Antriebsbügel 19 mit dem Antriebsklotz 16 zur Übertragung des Drehmomentes gekuppelt. So kann durch den Elektromotor 17 der Antriebsklotz 16 gedreht werden, wodurch er eine axiale Stellbewegung auf die Kopfplatte 14 ausübt, infolge der die Klemmbacke 7b gelüftet wird.

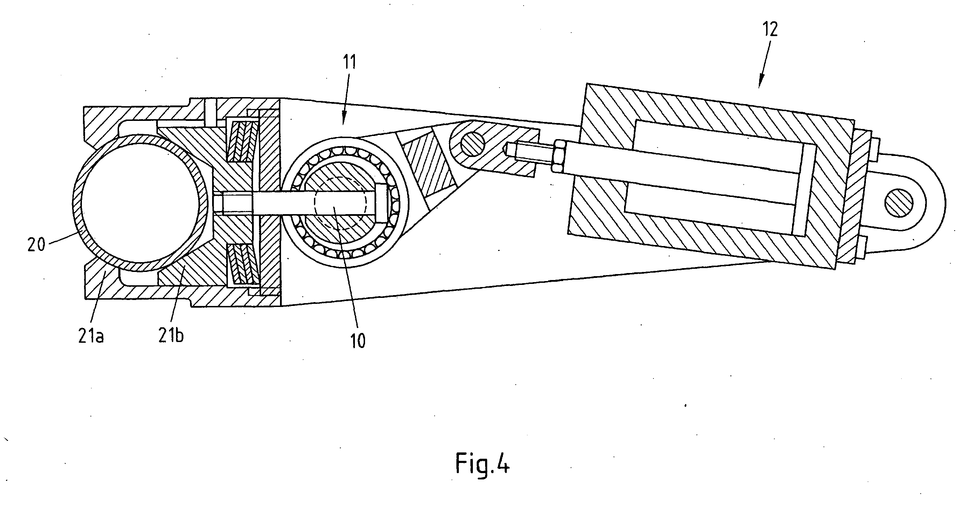

Das Ausführungsbeispiel der Fig. 4 unterscheidet sich von dem der Fig. 2 nur darin, dass mit der Klemm- und Löseeinheit nicht eine Kugel, sondern ein zylindrischer Körper, und zwar ein kreiszylindrisches Rohr 20, festgeklemmt wird. Dementsprechend sind die Klemmbacken 21a, 21b auch nicht ringförmig ausgebildet, sondern schalenförmig, wobei unter "schalenförmig" nicht nur Vollschalen verstanden werden, sondern auch paarweise zusammenwirkende axiale Stege. Es versteht sich, dass der Zugbolzen 10 nicht nur durch ein Exzentergetriebe mit Pneumatikantrieb 12 gemäß Fig. 2 verstellt werden kann, sondern auch durch den Antrieb der Fig. 3 mit Kurvengetriebe und Elektromotor.

## Patentansprüche

1. Tragarm für ein Spann- und/oder Zentrierelement (2) eines Greifergerüstes zum Halten von Raumformbauleilen in der Kfz.-Industrie, in dem ein mit mindestens einer Kugel (3a, 4a) verschwenkbar und/oder einem Zylinderzapfen (20, 30b) verschieb- und verdrehbar jeweils in einer Klemm- und Löseeinheit gehaltener Verstellmechanismus (7a, 7b-19, 21a, 21b) integriert ist, wobei die Klemm- und Löseeinheit die Kugel (3a) und/oder den Zylinderzapfen (20, 30b) mit axial oder radial spannbaren Klemmbacken (7a, 7b, 21a, 21b) umgreift, wobei zur Erzeugung der Klemmkraft der Klemmbacken (7a, 7b, 21a, 21b) ein mindestens eine der Klemmbacken (7a, 7b) beaufschlagender mechanischer, hydraulischer, pneumatischer oder elektromagnetischer Krafterzeuger (8) im Tragarm (1) integriert ist,
**dadurch gekennzeichnet, dass** die Klemmbacken (7a, 7b) mittels eines Stellgliedes (10) eines angetriebenen Exzenter- oder Kurvengetriebes (11, 15, 16, 14) gegen die Kraft des mindestens eine der Klemmbacken (7a, 7b) beaufschlagenden Krafterzeugers (8) lüftbar sind.

2. Tragarm nach Anspruch 1, **dadurch gekennzeichnet, dass** der Krafterzeuger eine Druckfeder (8) ist.

3. Tragarm nach Anspruch 1 oder 2, **dadurch gekennzeichnet, dass** die Klemmbacken (7a, 7b, 21a, 21b) als an einander gegenüberliegende Hälften der Kugel (3a) oder des Zylinderzapfens (20) angreifende Schalen ausgestaltet sind, deren Abstand durch das Exzenter- oder Kurvengetriebe (11, 15, 16, 14) einstellbar ist.

4. Tragarm nach Anspruch 3, **dadurch gekennzeichnet, dass** bei einer Kugel (3a) die Klemmbacken (7a, 7b) ringbis kalottenförmig gestaltet sind.

## Claims

1. A support arm for a clamping and/or centring element (2) of a gripper frame for holding three-dimensional components in the motor vehicle industry, in which an adjustment mechanism (7a, 7b-19, 21a, 21b) is integrated, with at least one ball (3a, 4a,) that can pivot and/or a cylindrical pin (20, 30b) that can slide and rotate, in either case held in a clamping and release unit, wherein the clamping and release unit encompasses the ball (3a) and/or the cylindrical pin (20, 30b) with clamping jaws (7a, 7b, 21a, 21b) that can be axially or radially clamped, wherein for the generation of the clamping force of the clamping jaws (7a, 7b, 21a, 21b) a mechanical, hydraulic, pneumatic, or electromagnetic force generator (8) applied to at least one of the clamping jaws (7a, 7b) is integrated in the support arm (1), **characterised in that** the clamping jaws (7a, 7b) can be released by means of an adjusting element (10) of a driven eccentric or cam mechanism (11, 15, 16, 14) against the force of the force generator (8) applied to at least one of the clamping jaws (7a, 7b).

2. The support arm according to Claim 1, **characterised in that** the force generator is a compression spring (8).

3. The support arm according to Claim 1 or 2, **characterised in that** the clamping jaws (7a, 7b, 21a, 21b) are configured as shells engaging with mutually opposing halves of the ball (3a) or cylindrical pin (20), whose separation distance can be adjusted by means of the eccentric or cam mechanism (11, 15, 16, 14).

4. The support arm according to Claim 3, **characterised in that** in the case of a ball (3a) the clamping jaws (7a, 7b) are configured in a ring- or calotte-shaped manner.

## Revendications

1. Bras de support pour un élément de serrage et /ou de centrage (2) d'une structure de préhension, destiné à retenir des pièces préformées à trois dimensions dans l'industrie automobile, dans lequel est intégré un mécanisme de réglage (7a, 7b - 19, 21a, 21b), qui est maintenu, respectivement dans une unité de serrage et de desserrage, en pouvant être incliné, avec au moins une rotule (3a, 4a) et / ou déplacé en translation et pivoté, avec un tourillon cylindrique (20, 30b), l'unité de serrage et de desserrage entourant la rotule (3a) et / ou le tourillon cylindrique (20, 30b) avec des mâchoires de serrage (7a, 7b, 21a, 21b), qui peuvent être serrées axialement ou radialement, un générateur de force (8) mécanique, hydraulique, pneumatique ou électromagnétique, qui agit au moins sur l'une des mâchoires de serrage (7a, 7b), étant intégré dans le bras de support (1) pour la génération de la force de serrage des mâchoires de serrage (7a, 7b, 21a, 21b), **caractérisé en ce que** les mâchoires de serrage (7a, 7b) peuvent être relâchées au moyen d'un organe de réglage (10) d'un engrenage à excentrique ou à cames (11, 15, 16, 14), en surmontant la force du générateur de force (8), qui agit au moins sur l'une des mâchoires de serrage (7a, 7b).

2. Bras de support selon la revendication 1, **caractérisé en ce que** le générateur de force est un ressort de pression (8).

3. Bras de support selon revendication 1 ou 2, **caractérisé en ce que** les mâchoires de serrage (7a, 7b, 21a, 21b) sont réalisées en forme de coquilles, qui attaquent les moitiés de la rotule (3a) ou du tourillon cylindrique (20), leur intervalle pouvant être réglé par l'engrenage à excentrique ou à cames (11, 15, 16, 14).

4. Bras de support selon la revendication 3, **caractérisé en ce que**, pour une rotule (3a), les mâchoires de serrage (7a, 7b) sont exécutées en forme de bague ou de calotte.
